Europäisches Patentamt

European Patent Office

Office européen des brevets

(19)

(11) Numéro de publication: **0 177 416 B1**

(12) # FASCICULE DE BREVET EUROPEEN

(45) Date de publication du fascicule du brevet:
**24.05.89**

(51) Int. Cl.⁴: **F 25 D 3/10,** F 17 C 3/08,
F 25 J 1/00, G 01 J 5/06

(21) Numéro de dépôt: **85401887.6**

(22) Date de dépôt: **26.09.85**

(54) Dispositif cryostatique pour détecteurs de rayonnements.

(30) Priorité: **02.10.84 FR 8415085**

(43) Date de publication de la demande:
**09.04.86 Bulletin 86/15**

(45) Mention de la délivrance du brevet:
**24.05.89 Bulletin 89/21**

(84) Etats contractants désignés:
**DE GB IT SE**

(56) Documents cités:
**FR-A- 1 529 857
US-A- 3 170 306
US-A- 3 258 602
US-A- 3 306 058
US-A- 3 356 846
US-A- 3 593 537
US-A- 3 970 851**

(73) Titulaire: **SAT Société Anonyme de
Télécommunications, 41, rue Cantagrel, F-75631 Paris
Cedex 13 (FR)**

(72) Inventeur Germain-Lacour, Michel Marie Emmanuel,
Rue de Montsabert, F-86240 Fontaine le Comte (FR)
Inventeur: **Loiseau, Joseph Marie Augustin, 125, rue du
Maréchal Leclerc, F-94410 Saint Maurice (FR)**

(74) Mandataire: **Bloch, Robert et al, 6, rue du Faubourg
Saint-Honoré, F-75008 Paris (FR)**

## Description

La présente invention a pour objet un dispositif cryostatique pour détecteur de rayonnements comprenant:

- un doigt supportant ledit détecteur et étant pourvu d'une alimentation frigorifique capable d'abaisser la température du doigt jusqu'à une température normale de fonctionnement dudit détecteur, inférieure à la température maximale de fonctionnement dudit détecteur, et,

- une paroi entourant ledit doigt et ledit détecteur, pourvue, en face dudit détecteur, d'une fenêtre transparente aux rayonnements à détecter, et dans lequel l'enceinte délimitée par ledit doigt et ladite paroi, et comprenant donc ledit détecteur, est fermée et remplie d'au moins un gaz maintenu ainsi à volume constant, ledit gaz étant transparent aux rayonnements à détecter, et ayant, comme par exemple les gaz suivants: xénon, krypton, argon, azote, dioxyde de carbone, protoxyde d'azote, et un mélange de ces gaz, une faible conductivité thermique.

La présente invention s'applique à toutes sortes de détecteurs de rayonnements devant fonctionner à température très basse, en particulier les détecteurs de rayonnements infrarouge.

On connaît déjà un dispositif cryostatique du type ci-dessus, décrit dans le brevet US-A 3 356 846. On connaît également un dispositif d'un type voisin, décrit dans le brevet FR-A 1 529 857.

De tels dispositifs présentent, par rapport aux dispositifs classiques, où l'isolation thermique est réalisée par mise sous vide de l'enceinte délimitée par le doigt et la paroi, le principal avantage de ne pas nécessiter, à chaque fois que le détecteur doit être changé, par exemple, une fastidieuse opération de pompage pour mettre l'enceinte sous vide.

Afin d'éliminer tout risque de condensation du gaz à l'intérieur de l'enceinte, le brevet FR-A 1 529 857 enseigne d'utiliser en gaz choisi pour que sa température de liquéfaction, dans l'enceinte, soit inférieure à celle du doigt.

Ces dispositifs précentent toutefois les inconvénients suivants. Du fait, notamment, que la conductivité thermique du gaz de remplissage est non nulle, l'autonomie du dispositif est nécessairement inférieure à celle d'un dispositif classique, sous vide, de mêmes dimensions, malgré l'emploi d'un isolant solide, comme enseigné dans le brevet US-A 3 356 846, ou d'une coûteuse double paroi sous vide scellé, comme enseigné dans le brevet FR-A 1 529 857. L'autonomie d'un tel dispositif est le temps pendant lequel la température du détecteur reste inférieure à sa température maximale de fonctionnement, pour un temps de mise en froid déterminé.

La présente invention vise à pallier ces inconvénients.

Elle a pour objet, à cet effet, un dispositif cryostatique du type défini ci-dessus, caractérisé par le fait que la pression de remplissage dudit gaz dans ladite enceinte est telle que sa température de liquéfaction ou de solidification est supérieure à ladite température normale de fonctionnement, et inférieure à ladite température maximale de fonctionnement, de façon que ledit gaz se liquéfie ou se solidifie lors du refroidissement dudit doigt à ladite température normale de fonctionnement par l'alimentation frigorifique, et, après coupure ou épuisement de l'alimentation frigorifique, se vaporise ou se sublime avant que ledit détecteur arrive à ladite température maximale de fonctionnement.

Dans le dispositif de l'invention, la chaleur latente de vaporisation ou de sublimation du gaz de remplissage augmente de façon notable son autonomie.

Par ailleurs, l'isolant solide, ou la double paroi sous vide scellé ne sont plus nécessaires. Le coût de l'appareil s'en trouve notablement réduit, et sa fiabilité accrue.

Les gaz de la liste ci-dessus sont inertes dans les conditions d'utilisation des détecteurs de rayonnements.

En prévoyant, dans le dispositif de la présente invention, une température de liquéfaction ou de solidification supérieure à la température du doigt, la demanderesse est allée à l'encontre de l'enseignement du brevet FR-A 1 529 857. Par ailleurs, dans la présente invention la chaleur latente de vaporisation ou de sublimation du gaz de remplissage est utilisée de manière tout à fait différente de celle dont sont utilisés ces phénomènes physiques dans d'autres dispositifs de refroidissement de l'art antérieur. Ainsi, et par exemple, il est décrit dans le brevet US-A 3 170 306 un dispositif dans lequel un doigt est refroidi à l'aide d'un gaz liquéfié. Toutefois, dans ce dispositif, d'une part le gaz est maintenu à pression constante, et non, comme dans la présente invention, à volume constant, et d'autre part, le détecteur à refroidir est disposé à l'extérieur de l'enceinte qui contient le gaz.

Avantageusement, le fluide frigorigène utilisé pour refroidir ledit doigt est récupéré en sortie dudit doigt pour être appliqué dans une chemise entourant ladite paroi.

L'autonomie de fonctionnement du dispositif se trouve encore augmentée, grâce à la diminution de la température extérieure de la paroi.

L'invention sera mieux comprise à l'aide de la description suivante de la forme de réalisation préférée du dispositif cryostatique de l'invention, faite en se référant aux dessins annexés, sur lesquels,

- la figure 1 représente un dispositif cryostatique selon l'invention,

- la figure 2 représente un diagramm classique de thermodynamique, concernant les changements entre les phases solides S, liquide L et vapeur V d'un corps pur, en fonction de sa température T et de sa pression P.

- la figure 3 est un diagramme d'évolution, au cours du temps $\emptyset$ de la température T du dispositif de la figure 1, représentée en trait plein, comparée à celle d'un dispositif selon l'art antérieur, représentée en trait pointillé, et

- la figure 4 présente des enregistrements expérimentaux de l'évolution, au cours du temps ∅, de la température T d'un dispositif selon l'invention, représentée en trait plein, ainsi que d'un dispositif selon l'art antérieur, représentée en trait pointillé.

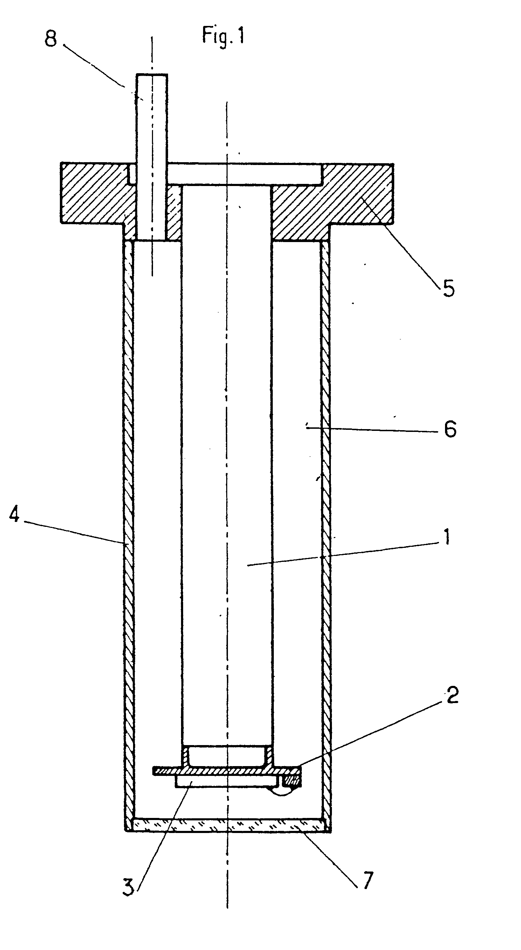

Comme représenté sur la figure 1, un détecteur de rayonnement, ici un photodétecteur 3 est supporté par l'embout 2 d'un doigt 1 entouré par une paroi 4 formant avec ce doigt une enceinte 6 étanche et fermée. La paroi 4 est munie d'une fenêtre 7 faisant face au détecteur 3 afin de laisser passer les rayonnements à détecter.

Par l'intermédiaire d'un gueusot 8, après montage du photodétecteur 3, on effectue, dans l'enceinte 6 interparois, un bref dégazage de l'enceinte entourant le doigt 1 puis on introduit, dans cet espace 6, un gaz à faible conductibilité thermique sous pression convenable.

L'alimentation frigorifique du doigt 1, d'un type connu, ici un système à détente joule-Thomson, est alors mise en marche, afin d'abaisser la température du doigt froid jusqu'à la valeur T1, température nominale de fonctionnement du photodétecteur 1, ici égale à la température de liquéfaction du fluide frigorigène contenu à l'intérieur du doigt 1.

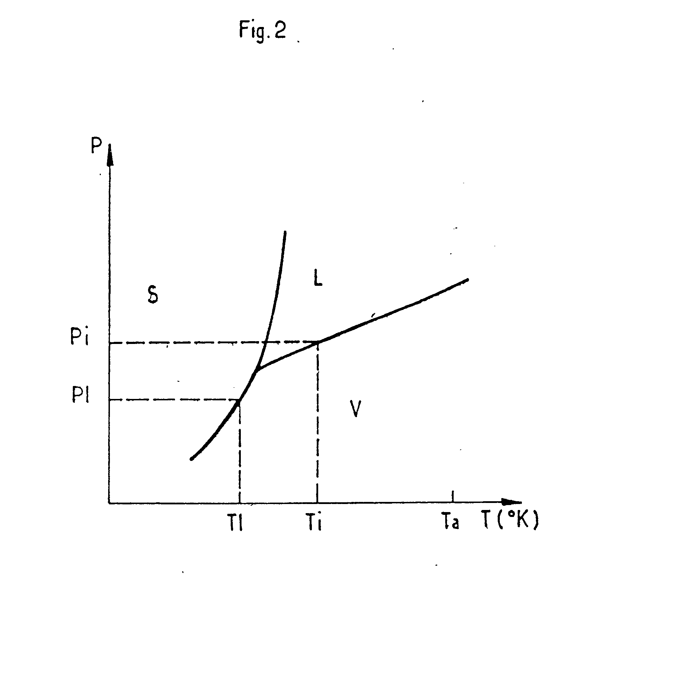

La figure 2 représente le diagramme de changement de phases du gaz de remplissage de l'enceinte 6, dont le volume est constant. La température T1 correspond ici à un équilibre des phases solide-vapeur, la pression de vapeur saturante s'établissant à la pression d'équilibre P1 correspondante. Sur la figure 2 est également portée la température Ti, qui correspond à la température limite supérieure au dessus de laquelle on considère que le photodétecteur 3 a un fonctionnement non satisfaisant. Ici, la température Ti correspond à un équilibre des phases liquide-vapeur du gaz de remplissage de l'enceinte 6, et la pression de vapeur saturante correspondante est Pi.

Ainsi, au cours du refroidissement du doigt 1, le gaz de remplissage de l'enceinte 6 se condense, puis se solidifie, partiellement, pour aboutir à l'équilibre solide-vapeur à la température finale T1.

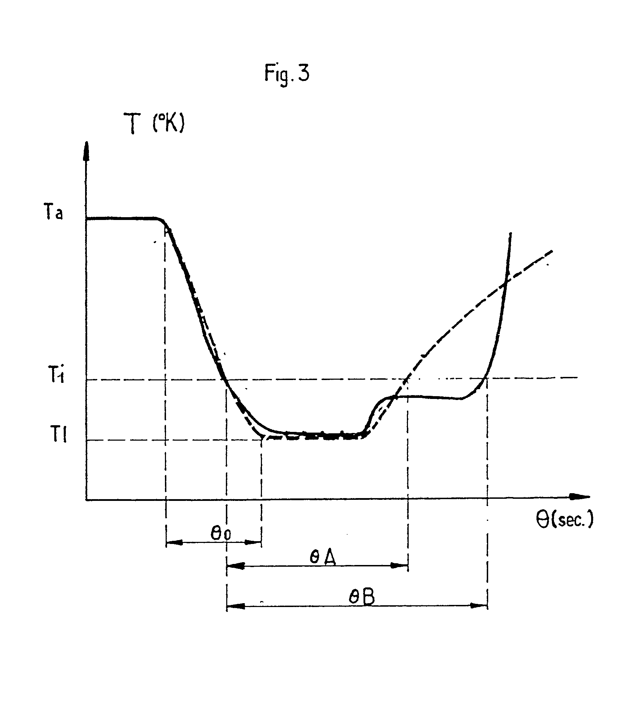

Après coupure ou épuisement de l'alimentation frigorifique, la chaleur latente de sublimation du gaz condensé est récupérée et contribue à maintenir la température du doigt 1 froid pendant la durée du changement de phase. En effet, en se reportant à la figure 3, pour le dispositif cryostatique selon l'invention (trait plein), comme pour un dispositif classique sous vide selon l'art antérieur (trait pointillé), l'évolution de la température T pendant la durée ∅o de réfrigération est semblable, et la courbe est sensiblement linéaire depuis la température Ta ambiante jusque vers la température intermédiaire Ti, puis s'infléchit rapidement pour atteindre la température T1 de liquéfaction du fluide frigorigène, pendant les changement de phase du gaz contenu dans l'enceinte 6. Lorsqu'on cesse de réfrigérer le doigt 1, dans le dispositif classique, la température croît quasi linéairement dans le temps. L'autonomie

de fonctionnement ∅A correspond à la durée d'utilisation du photodétecteur. Dans le dispositif de l'invention, la température connaît un second palier correspondant à la chaleur latente de sublimation du gaz de remplissage de l'enceinte 6. Ceci a pour effet d'accroître artificiellement la capacité calorifique du dispositif cryostatique de l'invention et, par conséquent, d'accroître l'autonomie ∅B de fonctionnement du détecteur comme illustré sur la figure.

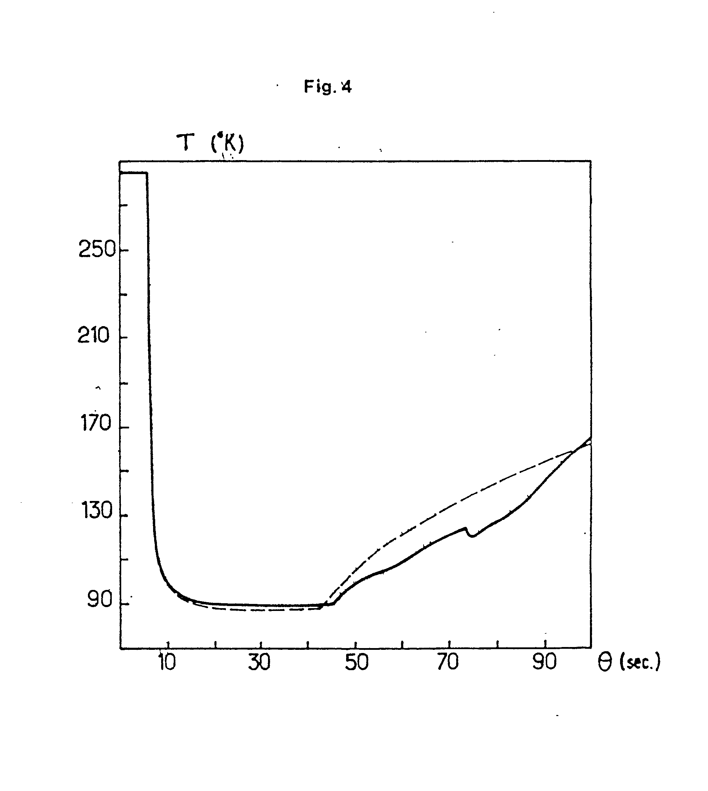

La figure 4 présente des résultats expérimentaux qui confirment ces prédictions, dans le cas où la température intermédiaire est de 120°K par exemple.

L'autonomie du dispositif de l'invention peut sensiblement être augmentée selon le gaz utilisé. Ce gaz peut être le xénon, le krypton, l'argon, l'azote, le dioxyde de carbone, protoxyde d'azote ou, également, un mélange de ces gaz, sous pressions partielles convenablement choisies.

Comme il n'est plus nécessaire d'avoir de double paroi sous vide scellé, la structure mécanique de l'enceinte peut devenir plus simple et moins lourde. les étanchéités et les connexions électriques des photodétecteurs peuvent être conçues plus facilement. Le dispositif de l'invention permet également un stockage plus fiable.

Il est naturellement possible, sans sortir du cadre de l'invention, d'utiliser la chaleur de vaporisation du gaz en fonction du mélange de gaz choisi. Il suffit de choisir un mélange tel que la température T1 corresponde à un équilibre liquide-vapeur au lieu de solide-vapeur.

Le dispositif de l'invention peut être modifié de façon à récupérer, en sortie du doigt 1, au moins une partie du fluide frigorigène utilisé pour l'alimentation frigorifique de ce doigt 1 et à canaliser le gaz froid résultant dans une chemise accolée à la paroi 4.

Cette thermalisation de la paroi 4 du dispositif cryostatique d'une part, réduit l'écart de température entre l'intérieur et l'extérieur du dispositif, diminuant de ce fait les pertes thermiques et augmentant corrélativement l'autonomie de fonctionnement, et d'autre part, assure un désembuage éventuel de la fenêtre 7.

Le dispositif cryostatique de l'invention présente de très nombreux autres avantages tels que la suppression de getters destinés à maintenir le vide; il autorise enfin l'usage à l'intérieur du dispositif cryostatique de divers produits organiques plus performants (colles époxydes, noirs organiques,...) mais peut être plus dégazants et, par le fait, inutilisables dans le vide.

### Revendications

1. Dispositif cryostatique pour détecteur de rayonnements (3) comprenant:
- un doigt (1) supportant ledit détecteur (3) et étant pourvu d'une alimentation frigorifique capable d'abaisser la température du doigt (1) jusqu'à une température normale de fonctionnement (Te) dudit détecteur (3), inférieure à la température maximale de fonctionnement (Ti) dudit détecteur (3), et,

– une paroi (4) entourant ledit doigt (1) et ledit détecteur (3), pourvue, en face dudit détecteur (3), d'une fenêtre (7) transparente aux rayonnements à détecter, et dans lequel l'enceinte (6) délimitée par ledit doigt (1) et ladite paroi (4), et comprenant donc ledit détecteur (3), est fermée et remplie d'au moins un gaz maintenu ainsi à volume constant, ledit gaz étant transparent aux rayonnements à détecter, et ayant, comme par exemple les gaz suivants: xénon, krypton, argon, azote, dioxyde de carbone, protoxyde d'azote, et un mélange de ces gaz, une faible conductivité thermique, dispositif caractérisé par le fait que la pression de remplissage dudit gaz dans ladite enceinte (6) est telle que sa température de liquéfaction ou de solidification est supérieure à ladite température normale de fonctionnement (Te), et inférieure à ladite température maximale de fonctionnement (Ti) de façon que ledit gaz se liquéfie ou se solidifie lors du refroidissement dudit doigt (1) à ladite température normale de fonctionnement (Te) par l'alimentation frigorifique, et, après coupure ou épuisement de l'alimentation frigorifique, se vaporise ou se sublime avant que ledit détecteur (3) arrive à ladite température maximale de fonctionnement (Ti).

2. Dispositif selon la revendication 1, dans lequel le fluide frigorigène utilisé pour refroidir ledit doigt (1) est récupéré en sortie dudit doigt (1) pour être appliqué dans une chemise entourant ladite paroi (4).

## Claims

1. Cryogenic device for radiation detector (3) comprising:
– a finger (1) supporting said detector (3) and provided with a refrigerant supply which can lower the temperature of the finger (1) to a normal operating temperature (Te) of said detector (3), lower than the maximum operating temperature (Ti) of said detector (3), and,
– a wall (4) surrounding said finger (1) and said detector (3) having, opposite said detector (3), a window (7) transparent to the radiation to be detected, wherein the enclosure (6) defined by said finger (1) and said wall (4) and thus comprising said detector (3), is closed and filled with at least a gas being so maintained at a constant volume, said gas being transparent to the radiation to be detected, and having, as for example the following gases: xenon, krypton, argon, nitrogen, carbon dioxide, nitrogen protoxide, and a mixture of these gases, a low thermal conductivity, device characterized in that the filling pressure of said gaz in said enclosure (6) is chosen so that its liquefaction or solidification temperature is higher than said normal operating temperature (Te), and lower than said maximum operating temperature (Ti), so that said gaz liquefies or solidifies during cooling of said finger (1) to said normal operating temperature (Te) by means of refrigerant supply, and, after the refrigerant supply has been cut off or exhausted, vaporizes or sublimes before said detector (3) reaches said maximum operating temperature (Ti).

2. Device according to claim 1, wherein the refrigerating fluid used for cooling said finger (1) is recovered at the output of said finger (1) to be applied in a jacket surrounding said wall (4).

## Patentansprüche

1. Kryostatische Einrichtung für Strahlungsfühler (3) mit
– einem Zapfen (1), der den Fühler (3) festhält und mit einer Kältezufuhr versehen ist, die die Temperatur des Zapfens (1) auf eine unter der maximalen Betriebstemperatur (Ti) des Fühlers (3) liegende normale Betriebstemperatur (Te) des Fühlers (3) absenken kann, und
– einer Wandung (4), die den Zapfen (1) und den Fühler (3) umgibt und gegenüber von dem Fühler (3) mit einem Fenster (7) versehen ist, das für die zu fühlenden Strahlen durchlässig ist, wobei der Raum (6), der von dem Zapfen (1) und der Wandung (4) begrenzt wird und somit den Fühler (3) enthält, eingeschlossen und mit mindestens einem auf einem konstanten Volumen so gehaltenen Gas eingefüllt ist, das für die fühlenden Strahlen durchlässig ist und wie z.B. die folgenden Gase: Yenon, Krypton, Argon, Stickstoff, Kohlendioxid, Stickstoffoxid und eine Mischung dieser Gase, eine schwache thermische Leitfähigkeit hat, dadurch gekennzeichnet, dass der Fülldruck des Gases in dem Raum (6) so ist, dass seine Verflüssigungs- oder Verfestigungstemperatur über der normalen Betriebstemperatur (Te) und unter der maximalen Betriebstemperatur (Ti) liegt, so dass das Gas bei der Abkühlung des Zapfens (1) auf die normale Betriebstemperatur (Te) durch die Kältezufuhr sich verflüssigt oder verfestigt und nach der Unterbrechung oder Erschöpfung der Kältezufuhr verdampft oder sublimiert, bevor der Fühler (3) die maximale Betriebstemperatur (Ti) erreicht.

2. Einrichtung nach Anspruch 1, wobei das zum Abkühlen des Zapfens (1) verwendete Kühlmittel beim Verlassen des Zapfens (1) wiedergewonnen wird, um in einem die Wandung (4) umgebenden Mantel verwendet zu werden.

Fig. 1

Fig. 2

Fig. 3

**Fig. 4**